# EUROPEAN PATENT SPECIFICATION

(11) **EP 3 029 975 B1**
(45) Date of publication and mention of the grant of the patent: **15.11.2017**
(21) Application number: 13894255.2
(22) Date of filing: 30.09.2013
(51) Int. Cl.: H04W 16/14

(54) **SHARED SPECTRUM OCCUPATION METHODS AND DEVICE**
VERFAHREN UND VORRICHTUNG ZUR BESETZUNG EINES GETEILTEN SPEKTRUMS
PROCÉDÉS ET DISPOSITIF D'OCCUPATION DE SPECTRE PARTAGÉ

(43) Date of publication of application: 08.06.2016
(73) Proprietor: Huawei Technologies Co., Ltd., Longgang District Shenzhen, Guangdong 518129 (CN)
(72) Inventor: YAN, Zhiyu, Shenzhen Guangdong 518129 (CN); ZHENG, Juan, Shenzhen Guangdong 518129 (CN); MA, Sha, Shenzhen Guangdong 518129 (CN)
(74) Representative: Pfenning, Meinig & Partner mbB
(86) International application number: PCT/CN2013/084694
(87) International publication number: WO 2015/042941

(56) References cited:
- WO-A1-2013/095041
- CN-A- 1 930 824
- CN-A- 102 651 869
- US-A1- 2005 135 303
- US-A1- 2012 120 924

## Description

### TECHNICAL FIELD

The present invention relates to the field of wireless communications technologies, and in particular, to methods and a device for occupying a shared spectrum in a wireless communications network.

### BACKGROUND

In a current wireless communications network, for an unlicensed spectrum (unlicensed spectrum) that is not specifically assigned to a particular organization by the state government offices, because there is no restriction on use by a wireless communications system and an operator, a case exists that multiple operators of multiple communications systems want to occupy a same spectrum. To reduce use conflicts of an unlicensed spectrum, generally, when a communications node (which is also briefly referred to as a node below) needs to use a spectrum to send information, the node first needs to sense whether there is another node on the spectrum transmitting information, and if the spectrum is not occupied by another node, the node may use the spectrum to transmit information; and if the node has sensed that there is another node on the spectrum transmitting information, the node cannot perform information transmission processing until the spectrum is idle.

There are two mechanisms for sensing an occupation status of a shared spectrum such as an unlicensed spectrum: physical carrier sensing and virtual carrier sensing. In physical carrier sensing, a node perceives energy, a signal feature, or the like of a neighboring node to determine whether a carrier is occupied. In virtual carrier sensing, when sending a data packet, a node that occupies a wireless spectrum resource carries resource reservation information such as a resource occupation time length, to indicate that a carrier is occupied by the node within the time length starting from a sending moment, and another node may determine a use status of the carrier by sensing the resource reservation information.

Because in physical carrier sensing, a node used as a sensor needs to be always in a sensing state, there exists a problem of large power consumption; on the other hand, physical carrier sensing cannot resolve a node hiding problem. Therefore, virtual carrier sensing is widely used.

However, in a case in which a spectrum resource such as an unlicensed spectrum resource is shared between different wireless communications systems or different operators of a same wireless communications system, the different wireless communications systems or the different operators of the same wireless communications system generally use different system encryption processing and/or cell identity scrambling processing, so that when virtual carrier sensing is performed, a problem exists that a node of an operator cannot learn an occupation status of a node of another operator for the shared spectrum resource.

US2012/0120924A discloses a method, an apparatus, and a computer program product, which may be configured to provide at least one control channel for downlink grant information, provide at least one other control channel for uplink grant information, and adjust time apportioned for the downlink and uplink grant information in the control channels.

### SUMMARY

The reader is referred to the appended independent claims. Some preferred aspects are laid out in the dependent claims.

In view of this, a technical problem to be resolved by the present invention is: Even if a spectrum is shared between communications nodes belonging to different wireless communications systems and/or different operators, each communications node can also use virtual carrier sensing to accurately learn a use status of another communications node for the shared spectrum. The present invention to resolve the foregoing technical problem is defined in the appended independent claims.

To resolve the foregoing technical problem, according to a first aspect of the present invention, a method for occupying a shared spectrum is provided, including: determining, by a first communications node according to a resource occupation manner to be performed by the first communications node for a shared spectrum, a sending resource of resource reservation information by using a preset correspondence, where the correspondence includes a relationship between at least two of the resource occupation manner and at least two of the sending resource, and the resource reservation information represents the resource occupation manner; and sending, by the first communications node, the resource reservation information by using the sending resource, so that a second communications node parses the sending resource of the resource reservation information, and determines, by using the correspondence, the resource occupation manner of the first communications node for the shared spectrum.

With reference to the first aspect, in a first possible implementation manner, the resource occupation manner includes a time length for which the shared spectrum is to be occupied; and the correspondence includes a correspondence between at least two of the time length and the at least two of the sending resource.

With reference to the first possible implementation manner of the first aspect, in a second possible implementation manner, the resource occupation manner further includes a frequency range of the shared spectrum to be occupied, and the frequency range is less than or equal to an entire frequency range of the shared spectrum; and the correspondence includes a correspondence between at least two combinations of the time length and the frequency range and the at least two of the sending resource.

With reference to any one of the first aspect, the first possible implementation manner of the first aspect, and the second possible implementation manner of the first aspect, in a third possible implementation manner, the sending resource includes at least two particular sequences used for sending the resource reservation information, where auto-correlation of each of the sequences is good, and cross-correlation of every two of the sequences is poor; and the correspondence includes a correspondence between the at least two of the resource occupation manner and at least two of the sequences.

With reference to the third possible implementation manner of the first aspect, in a fourth possible implementation manner, the sequence is a constant amplitude zero auto-correlation sequence.

With reference to either of the third possible implementation manner of the first aspect and the fourth possible implementation manner of the first aspect, in a fifth possible implementation manner, the sending resource further includes at least two particular frequencies used for sending the resource reservation information, and every two of the frequencies are completely orthogonal or partially orthogonal; and the correspondence includes a correspondence between at least two combinations of the sequences and the frequencies and the at least two of the resource occupation manner.

To resolve the foregoing technical problem, according to a second aspect of the present invention, a method for occupying a shared spectrum is provided, including: receiving, by a second communications node, resource reservation information from a first communications node, where the resource reservation information represents a resource occupation manner to be performed by the first communications node for a shared spectrum; and parsing, by the second communications node, a sending resource of the resource reservation information, and determining, by using a preset correspondence, the resource occupation manner of the first communications node for the shared spectrum, where the correspondence includes a relationship between at least two of the resource occupation manner and at least two of the sending resource.

With reference to the second aspect, in a first possible implementation manner, the resource occupation manner includes a time length for which the shared spectrum is to be occupied; and the correspondence includes a correspondence between at least two of the time length and the at least two of the sending resource.

With reference to the first possible implementation manner of the second aspect, in a second possible implementation manner, the resource occupation manner further includes a frequency range of the shared spectrum to be occupied, and the frequency range is less than or equal to an entire frequency range of the shared spectrum; and the correspondence includes a correspondence between at least two combinations of the time length and the frequency range and the at least two of the sending resource.

With reference to any one of the second aspect, the first possible implementation manner of the second aspect, and the second possible implementation manner of the second aspect, in a third possible implementation manner, the sending resource includes at least two particular sequences used for sending the resource reservation information, where auto-correlation of each of the sequences is good, and cross-correlation of every two of the sequences is poor; and the correspondence includes a correspondence between the at least two of the resource occupation manner and at least two of the sequences.

With reference to the third possible implementation manner of the second aspect, in a fourth possible implementation manner, the sequence is a constant amplitude zero auto-correlation sequence.

With reference to either of the third possible implementation manner of the second aspect and the fourth possible implementation manner of the second aspect, in a fifth possible implementation manner, the sending resource further includes at least two particular frequencies used for sending the resource reservation information, and every two of the frequencies are completely orthogonal or partially orthogonal; and the correspondence includes a correspondence between at least two combinations of the sequences and the frequencies and the at least two of the resource occupation manner.

To resolve the foregoing technical problem, according to a third aspect of the present invention, a device for occupying a shared spectrum is provided, which is used in a first communications node and includes: a determining unit, determining, according to a resource occupation manner to be performed by the first communications node for a shared spectrum, a sending resource of resource reservation information by using a preset correspondence, where the correspondence includes a relationship between at least two of the resource occupation manner and at least two of the sending resource, and the resource reservation information represents the resource occupation manner; and a sending unit, sending the resource reservation information by using the sending resource, so that a second communications node parses the sending resource of the resource reservation information, and determines, by using the correspondence, the resource occupation manner of the first communications node for the shared spectrum.

With reference to the third aspect, in a first possible implementation manner, the resource occupation manner includes a time length for which the shared spectrum is to be occupied; and the correspondence includes a correspondence between at least two of the time length and the at least two of the sending resource.

With reference to the first possible implementation manner of the third aspect, in a second possible implementation manner, the resource occupation manner further includes a frequency range of the shared spectrum to be occupied, and the frequency range is less than or equal to an entire frequency range of the shared spectrum; and the correspondence includes a correspondence between at least two combinations of the time length and the frequency range and the at least two of the sending resource.

With reference to any one of the third aspect, the first possible implementation manner of the third aspect, and the second possible implementation manner of the third aspect, in a third possible implementation manner, the sending resource includes at least two particular sequences used for sending the resource reservation information, where auto-correlation of each of the sequences is good, and cross-correlation of every two of the sequences is poor; and the correspondence includes a correspondence between the at least two of the resource occupation manner and at least two of the sequences.

With reference to the third possible implementation manner of the third aspect, in a fourth possible implementation manner, the sequence is a constant amplitude zero auto-correlation sequence.

With reference to either of the third possible implementation manner of the third aspect and the fourth possible implementation manner of the third aspect, in a fifth possible implementation manner, the sending resource further includes at least two particular frequencies used for sending the resource reservation information, and every two of the frequencies are completely orthogonal or partially orthogonal; and the correspondence includes a correspondence between at least two combinations of the sequences and the frequencies and the at least two of the resource occupation manner.

To resolve the foregoing technical problem, according to a fourth aspect of the present invention, a device for occupying a shared spectrum is provided, which is used in a second communications node and includes: a receiving unit, configured to receive resource reservation information from a first communications node, where the resource reservation information represents a resource occupation manner to be performed by the first communications node for a shared spectrum; and a parsing unit, configured to parse a sending resource of the resource reservation information received by the receiving unit, and determine, by using a preset correspondence, the resource occupation manner of the first communications node for the shared spectrum, where the correspondence includes a relationship between at least two of the resource occupation manner and at least two of the sending resource.

With reference to the fourth aspect, in a first possible implementation manner, the resource occupation manner includes a time length for which the shared spectrum is to be occupied; and the correspondence includes a correspondence between at least two of the time length and the at least two of the sending resource.

With reference to the first possible implementation manner of the fourth aspect, in a second possible implementation manner, the resource occupation manner further includes a frequency range of the shared spectrum to be occupied, and the frequency range is less than or equal to an entire frequency range of the shared spectrum; and the correspondence includes a correspondence between at least two combinations of the time length and the frequency range and the at least two of the sending resource.

With reference to any one of the fourth aspect, the first possible implementation manner of the fourth aspect, and the second possible implementation manner of the fourth aspect, in a third possible implementation manner, the sending resource includes at least two particular sequences used for sending the resource reservation information, where auto-correlation of each of the sequences is good, and cross-correlation of every two of the sequences is poor; and the correspondence includes a correspondence between the at least two of the resource occupation manner and at least two of the sequences.

With reference to the third possible implementation manner of the fourth aspect, in a fourth possible implementation manner, the sequence is a constant amplitude zero auto-correlation sequence.

With reference to either of the third possible implementation manner of the fourth aspect and the fourth possible implementation manner of the fourth aspect, in a fifth possible implementation manner, the sending resource further includes at least two particular frequencies used for sending the resource reservation information, and every two of the frequencies are completely orthogonal or partially orthogonal; and the correspondence includes a correspondence between at least two combinations of the sequences and the frequencies and the at least two of the resource occupation manner.

By establishing a correspondence between a resource occupation manner of a shared spectrum and a sending resource of resource reservation information in advance, a first communications node used as a sending node is enabled to send the resource reservation information by using a particular sending resource, so that according to the method and the device for occupying a shared spectrum in the present invention, a second communications node used as a receiving node can parse the sending resource of the resource reservation information to learn a use status of the sending node for the shared spectrum, even if the sending node and the receiving node belong to different wireless communications systems and/or different operators.

### BRIEF DESCRIPTION OF DRAWINGS

The accompanying drawings that are included in this specification and that constitute a part of this specification show the exemplary embodiments, features and aspects of the present invention together with this specification, and are used to explain the principle of the present invention.
FIG. 1 shows a flowchart of a method for occupying a shared spectrum according to an aspect of the present invention;
FIG. 2 shows a structural block diagram of a device for occupying a shared spectrum according to an aspect of the present invention;
FIG. 3 shows a structural block diagram of a device for occupying a shared spectrum according to another aspect of the present invention;
FIG. 4 shows a structural block diagram of a device for occupying a shared spectrum according to still another aspect of the present invention; and
FIG. 5 shows a structural block diagram of a device for occupying a shared spectrum according to yet another aspect of the present invention.

### DESCRIPTION

The following describes various exemplary features, and aspects of the present invention in detail with reference accompanying drawings. Same reference numerals in the accompanying drawings designate elements that have same or similar functions. Various aspects of the embodiments illustrated in the accompanying drawings may not be necessarily drawn to scale, unless otherwise specified.

Herein, the special term "exemplary" means "being used as an example, or a description". Any aspect described as "exemplary" herein is not necessarily construed as being superior to or better than another embodiment.

In addition, to better describe the present invention, many specific details are given in the following specific implementation manners. A person skilled in the art should understand that the present invention may still be implemented even without some specific details. In some other instances, a method, a means, an element, and a circuit that are well known by a person skilled in the art are not described in detail, so as to highlight the main idea of the present invention.

As described in the background and summary parts, the present invention mainly intends to expand an application scope of virtual carrier sensing, so that even in a case in which a shared spectrum resource such as an unlicensed spectrum is shared between communications nodes belonging to different wireless communications systems and/or different operators, each communications node can still accurately learn a resource occupation manner of another communications node for the shared spectrum. Moreover, considering that signal transmission of different wireless communications systems and/or different operators generally uses different system encryption processing and/or cell identity scrambling processing, the inventor innovatively conceived of using a signal transmission manner to indicate resource reservation information, so as to effectively avoid a problem in signal demodulation due to different system encryption processing and/or cell identity scrambling processing.

A resource occupation manner of a communications node for a shared spectrum refers that the communications node occupies any one or more of the following resources of the shared spectrum: a time resource, a frequency resource, and a code resource. For example, in a possible implementation manner, the resource occupation manner refers to how long the communications node is going to occupy all frequency resources of the shared spectrum. For another example, in another possible implementation manner, the resource occupation manner refers to how long the communications node is going to occupy some of the frequency resources of the shared spectrum.

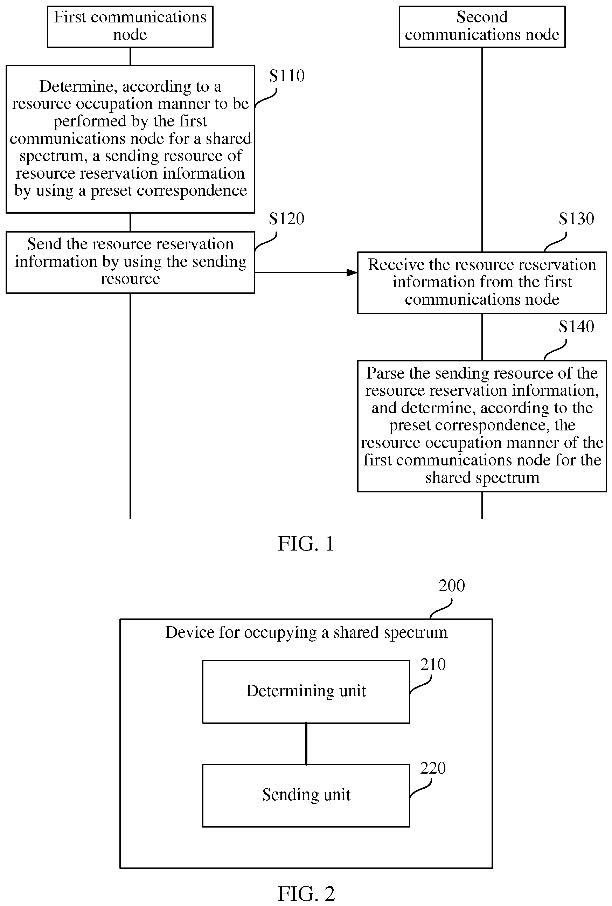

In a possible implementation manner, as shown in FIG. 1, on a side of a first communications node used as a sending node, a method for occupying a shared spectrum according to the present invention mainly includes the following steps:
S110: The first communications node determines, according to a resource occupation manner of the first communications node for a shared spectrum, a sending resource of resource reservation information by using a preset correspondence, where the correspondence mainly includes a relationship between at least two resource occupation manner and at least two sending resource, and the resource reservation information represents the resource occupation manner.
S120: The first communications node sends the resource reservation information by using the sending resource, so that a second communications node parses the sending resource of the resource reservation information, and determines, by using the correspondence, the resource occupation manner of the first communications node for the shared spectrum.

For example, the resource occupation manner may include a time length for which the shared spectrum is to be occupied. Correspondingly, the correspondence may mainly include a correspondence between at least two of the time length and the at least two of the sending resource.

In another specific possible implementation manner, the resource occupation manner may further include a frequency range of the shared spectrum to be occupied, and the frequency range is generally less than or equal to an entire frequency range of the shared spectrum. Correspondingly, the correspondence may mainly include a correspondence between at least two combinations of the time length and the frequency range and the at least two of the sending resource.

For another example, the sending resource of the resource reservation information may include at least two particular sequences used for sending the resource reservation information, where auto-correlation of each of the sequences is good, and cross-correlation of every two of the sequences is poor. Correspondingly, the correspondence may mainly include a correspondence between the at least two of the resource occupation manner and at least two of the sequences.

In addition, in another specific possible implementation manner, the sending resource of the resource reservation information may further include at least two particular frequencies used for sending the resource reservation information, where every two of the frequencies are completely orthogonal, that is, not overlapped, or partially orthogonal, that is, partially overlapped. Correspondingly, the correspondence may mainly include a correspondence between at least two combinations of the sequences and the frequencies and the at least two of the resource occupation manner.

In a specific possible implementation manner, as shown in FIG. 1, on a side of a second communications node used as a receiving node, a method for occupying a shared spectrum according to the present invention mainly includes the following steps:
S130: A second communications node receives resource reservation information from a first communications node, where the resource reservation information represents a resource occupation manner to be performed by the first communications node for a shared spectrum.
S140: The second communications node parses a sending resource of the resource reservation information, and determines, by using a preset correspondence, the resource occupation manner of the first communications node for the shared spectrum, where the correspondence mainly includes a relationship between at least two resource occupation manner and at least two sending resource.

In this way, because the first communications node used as a sending node uses a particular sending resource to indicate a resource occupation manner to be performed by the first communications node for the shared spectrum, instead of adding resource reservation information to a transmit signal, the second communications node used as a receiving node can learn, by detecting a sending resource used by each piece of resource reservation information and with reference to the foregoing preset correspondence, a resource occupation manner to be performed by the sending node for the shared spectrum, without the need of demodulating signal content of the resource reservation information.

In other words, by means of the method for occupying a shared spectrum according to the foregoing aspect of the present invention, multiple communications nodes that mutually share a spectrum can accurately learn resource occupation manners of each other for the shared spectrum, regardless of whether the multiple communications nodes belong to a same wireless communications system or a same operator.

Using different correspondences as examples, specific aspects of the foregoing method for occupying a shared spectrum according to the present invention are described below:

### Aspect 1

In this aspect, a resource occupation manner mainly includes a time length L for which a node is going to occupy all frequency resources of a shared spectrum, and a sending resource of resource reservation information mainly includes a sequence *S* used for sending the resource reservation information.

In a possible implementation manner, because a frequency resource in a resource occupation manner is preset as all frequency resources of the shared spectrum, a sending node does not need to notify a receiving node of information about the frequency resource in the resource occupation manner. In other words, a correspondence between a resource occupation manner and a sending resource of resource reservation information may be simplified as a correspondence between a time length in the resource occupation manner and a sequence used for sending the resource reservation information.

In a specific possible implementation manner, a sequence used for sending resource reservation information may be separately set for each of time lengths *L*₁, *L₂, ... L_{N}.* For example, a correspondence shown in the following Table 1 may exist between a resource occupation manner and a sending resource of resource reservation information, where N is an integer greater than or equal to 2.

**Table 1: Correspondence between a resource occupation manner and a sending resource of resource reservation information**

| | | | | |
|---|---|---|---|---|
| Time length *L* in the resource occupation manner | *L*₁ | *L*₂ | ... | *L_{N}* |
| Sequence *S* in the sending resource of resource reservation information | *S*₁ | *S*₂ | ... | *S_{N}* |

According to the preset correspondence in the foregoing Table 1, if the time length in the resource occupation manner is *L*₁, a sending node uses a sequence *S*₁ to send the resource reservation information; if the time length in the resource occupation manner is *L*₂*,* the sending node uses a sequence *S*₂ to send the resource reservation information; ... and if the time length in the resource occupation manner is *L_{N}*, the sending node uses a sequence *S_{N}* to send the resource reservation information.

The sequences *S*₁, *S*₂, ... *S_{N}* used for sending resource reservation information are N sequences with good auto-correlation and poor cross-correlation. For example, in a possible implementation manner, the sequences *S*₁, *S*₂, ... *S_{N}* may be constant amplitude zero auto-correlation (Constant Amplitude Zero Auto-Correlation, CAZAC) sequences.

In this way, in this aspect, the sending node may determine, based on a time length *Lₓ* in the resource occupation manner and with reference to the foregoing correspondence table, a sequence *Sₓ* used for sending resource reservation information, and send the resource reservation information by sending the determined sequence *Sₓ*, so that a receiving node can learn, based on the sequence *Sₓ* used for sending the resource reservation information, the resource occupation manner of the sending node for the shared spectrum.

In a specific possible implementation manner, a frequency resource for sending resource reservation information is a preset frequency resource in the shared spectrum. For example, a receiving node may perform blind detection on sequences *S*₁, *S*₂, ... *S_{N}* on the preset frequency resource, that is, perform correlation detection one by one on a sequence received on the preset frequency resource and the sequences *S*₁, *S*₂, ... *S_{N},* to find the received sequence is which one or more of the sequences *S*₁, *S*₂, ... *S_{N},* and determine, based on a detection result, a time length *Lₓ* for which a sending node occupies the shared spectrum.

Because the sending node uses, based on a preset correspondence between a resource occupation manner and a sending resource of resource reservation information, one of particular sequences *S*₁, *S*₂, ... *S_{N}* to send the resource reservation information, which is irrelevant to factors such as system encryption processing and cell identity scrambling processing, even if the receiving node and the sending node belong to different wireless communications systems and/or different operators, the receiving node can still correctly parse out, based on the foregoing preset correspondence, a time length in the resource occupation manner of the sending node.

Moreover, in a case in which two or more sending nodes simultaneously send resource reservation information, when resource occupation manners of the two or more sending nodes are different, because correlation between sequences used for sending the resource reservation information of the two or more sending nodes is poor, mutual interference between the resource reservation information of the two or more sending nodes when the information reaches the receiving node is avoided.

On the other hand, in the case in which two or more sending nodes simultaneously send resource reservation information, when resource occupation manners of the two or more sending nodes are the same, because sequences used for sending the resource reservation information of the two or more sending nodes are the same, the resource reservation information of the two or more sending nodes may be received in a combined manner when reaching the receiving node.

It can be seen that, in this aspect, even in a case in which two or more sending nodes simultaneously send resource reservation information, the resource reservation information of the two or more sending nodes can all be correctly parsed by another node, regardless of whether resource occupation manners of the two or more sending nodes for a shared spectrum are the same.

### Aspect 2

In this aspect, a resource occupation manner mainly includes a time length L for which a node is going to occupy all frequency resources of a shared spectrum, and a sending resource of resource reservation information mainly includes a sequence *S* and a frequency *F* that are used for sending the resource reservation information.

In a possible implementation manner, because a frequency resource in a resource occupation manner is preset as all frequency resources of the shared spectrum, a sending node does not need to notify a receiving node of information about the frequency resource in the resource occupation manner. A correspondence may be simplified as a correspondence between a time length in the resource occupation manner and a combination of a sequence and a frequency that are used for sending resource reservation information.

In other words, a combination *S*/*F* of a sequence and a frequency that are used for sending resource reservation information may be separately set for each of time lengths *L*₁ *L*₂, *... L_{N}.* For example, a correspondence shown in the following Table 2 may exist between a resource occupation manner and a sending resource of resource reservation information, where N is an integer greater than or equal to 2.

**Table 2: Correspondence between a resource occupation manner and a sending resource of resource reservation information**

| | | | | |
|---|---|---|---|---|
| Time length *L* in the resource occupation manner | *L*₁ | *L*₂ | ... | *L_{N}* |
| Sequence *S* in the sending resource of | *Sₓ* | *Sₓ* | ... | *Sₓ* |
| resource reservation information | | | | |
| Frequency *F* in the sending resource of resource reservation information | *F*₁ | *F₂* | ... | *F_{N}* |

According to the preset correspondence in the foregoing Table 2, if the time length in the resource occupation manner is *L*₁*,* the sending node may use a sequence *Sₓ* and a frequency *F*₁ to send the resource reservation information; if the time length in the resource occupation manner is *L₂,* the sending node may use a sequence *Sₓ* and a frequency *F*₂ to send the resource reservation information; ... and if the time length in the resource occupation manner is *L_{N},* the sending node uses a sequence *Sₓ* and a frequency *F_{N}* to send the resource reservation information.

The frequencies *F*₁*, F₂*, ... *F_{N}* used for sending resource reservation information may be frequency resources, every two of which are completely orthogonal or partially orthogonal. In a possible implementation manner, the frequencies *F*₁, *F*₂*, ... F_{N}* may be particular frequencies in the shared spectrum. In another possible implementation manner, some or all of the frequencies *F*₁, *F₂*, ... *F_{N}* may be particular frequencies that do not belong to the shared spectrum.

In this way, in this aspect, the sending node may determine, based on a time length *Lₓ* in the resource occupation manner of the node for the shared spectrum and with reference to the foregoing correspondence table, a sequence and a frequency that are used for sending resource reservation information, and send the resource reservation information by sending the determined sequence on the determined frequency, so that the receiving node can learn, based on the sequence and the frequency that are used for sending the resource reservation information, the resource occupation manner of the sending node for the shared spectrum.

For example, the receiving node may separately perform, on preset frequency resources *F*₁, *F₂*, ... *F_{N}* used for sending resource reservation information, blind detection on the sequence *Sₓ* used for sending resource reservation information, that is, perform correlation detection one by one on a sequence received on the frequency resources *F*₁, *F₂*, ... *F_{N}* and the sequences *S*₁, *S*₂, ... *S_{M},* to find the frequency and the sequence that are used for sending the received resource reservation information, and determine, based on a detection result, the time length *Lₓ* for which the sending node occupies the shared spectrum.

In addition, the sequences *Sₓ* used for sending resource reservation information may be any one of M sequences *S*₁, *S*₂, ... *S_{M}* with good auto-correlation and poor cross-correlation, where M is an integer greater than or equal to 1. For example, in a possible implementation manner, the sequences *S*₁, *S*₂ ... *S_{M}* may be CAZAC sequences.

Similar to the foregoing Aspect 1, in this aspect, because the sending node uses, based on the preset correspondence between a resource occupation manner and a sending resource of resource reservation information, a particular sequence and frequency to send the resource reservation information, which is irrelevant to factors such as system encryption processing and cell identity scrambling processing, even if the receiving node and the sending node belong to different wireless communications systems and/or different operators, the receiving node can still correctly parse out, based on the foregoing preset correspondence, a time length in the resource occupation manner of the sending node.

In addition, in this aspect, according to the time length in the resource occupation manner, not only a sequence used for sending resource reservation information is determined, but also a frequency used for sending the resource reservation information is determined, which is different from the foregoing Aspect 1 in which different time lengths in all resource occupation manners correspond to a same frequency used for sending resource reservation information.

In this way, in a case in which two or more sending nodes simultaneously send resource reservation information, when resource occupation manners of the two or more sending nodes are different, because frequencies of the resource reservation information of the two or more sending nodes are different, mutual interference between the resource reservation information of the two or more sending nodes when the information reaches the receiving node is avoided.

On the other hand, in the case in which two or more sending nodes simultaneously send resource reservation information, when resource occupation manners of the two or more sending nodes are the same, because frequencies and sequences used for sending the resource reservation information of the two or more sending nodes are the same or cross-correlation is poor, the resource reservation information of the two or more sending nodes may be received in a combined manner when reaching the receiving node.

It can be seen that, in this aspect, even in a case in which two or more sending nodes simultaneously send resource reservation information, the resource reservation information of the two or more sending nodes can all be correctly parsed by another node, regardless of whether resource occupation manners of the two or more sending nodes for a shared spectrum are the same.

### Aspect 3

In this aspect, a resource occupation manner mainly includes a time length *L* for which a node is going to occupy all frequency resources of a shared spectrum, and a sending resource of resource reservation information mainly includes a sequence *S* and a frequency *F* that are used for sending the resource reservation information.

In a possible implementation manner, because a frequency resource in a resource occupation manner is preset as all frequency resources of the shared spectrum, a sending node does not need to notify a receiving node of information about the frequency resource in the resource occupation manner. A correspondence may be simplified as a correspondence between a time length in the resource occupation manner and a combination of a sequence and a frequency that are used for sending resource reservation information.

In other words, a combination *S*/*F* of a sequence and a frequency that are used for sending resource reservation information may be separately set for each of time lengths *L*₁ *L₂, ... L_{N}.* For example, a correspondence shown in the following Table 3 may exist between a resource occupation manner and a sending resource of resource reservation information, where N is an integer greater than or equal to 2.

**Table 3: Correspondence between a resource occupation manner and a sending resource of resource reservation information**

| | | | | |
|---|---|---|---|---|
| Time length *L* in the resource occupation manner | *L*₁ | *L*₂ | ... | *L_{N}* |
| Sequence *S* in the sending resource of resource reservation information | *S*₁ | *S*₂ | ... | *S_{N}* |
| Frequency *F* in the sending resource of resource reservation information | *F*₁ | *F₂* | ... | *F_{N}* |

According to the preset correspondence in the foregoing Table 3, if the time length in the resource occupation manner is *L*₁*,* the sending node may use a sequence *S*₁ and a frequency *F*₁ to send the resource reservation information; if the time length in the resource occupation manner is *L₂,* the sending node may use a sequence *S*₂ and a frequency *F*₂ to send the resource reservation information; ... and if the time length in the resource occupation manner is *L_{N},* the sending node uses a sequence *S_{N}* and a frequency *F_{N}* to send the resource reservation information.

The frequencies *F*₁*, F₂*, ... *F_{N}* used for sending resource reservation information may be frequency resources, every two of which are completely orthogonal or partially orthogonal. In a possible implementation manner, the frequencies *F*₁, *F*₂, *... F_{N}* may be particular frequencies in the shared spectrum. In another possible implementation manner, some or all of the frequencies *F*₁, *F*₂, ... *F_{N}* may be particular frequencies that do not belong to the shared spectrum.

In this way, in this aspect, the sending node may determine, based on a time length *Lₓ* in the resource occupation manner of the node for the shared spectrum and with reference to the foregoing correspondence table, a sequence and a frequency that are used for sending resource reservation information, and send the resource reservation information by sending the determined sequence on the determined frequency, so that the receiving node can learn, based on the sequence and the frequency that are used for sending the resource reservation information, the resource occupation manner of the sending node for the shared spectrum.

For example, the receiving node may separately perform, on the frequency resources *F*₁, *F₂*, *... F_{N}* used for sending resource reservation information, blind detection on sequences *S*₁, *S*₂, ... *S_{N}* used for sending resource reservation information, that is, perform correlation detection one by one on a sequence received on the preset frequency resources *F*₁*, F₂*, ... *F_{N}* used for sending resource reservation information and the corresponding sequences used for sending resource reservation information on these frequency resources, to find the frequency and the sequence that are used for sending the received resource reservation information, and determine, based on a detection result, the time length *Lₓ* for which the sending node occupies the shared spectrum.

In addition, the sequences *S*₁, *S*₂, ... *S_{N}* used for sending resource reservation information may be N sequences with good auto-correlation and poor cross-correlation. For example, in a possible implementation manner, the sequences *S*₁, *S*₂, ... *S_{N}* may be CAZAC sequences.

In this way, similar to the foregoing Aspect 1 and Aspect 2, in this aspect, because the sending node uses, based on the preset correspondence between a resource occupation manner and a sending resource of resource reservation information, a particular sequence and frequency to send the resource reservation information, which is irrelevant to factors such as system encryption processing and cell identity scrambling processing, even if the receiving node and the sending node belong to different wireless communications systems and/or different operators, the receiving node can still correctly parse out, based on the foregoing preset correspondence, a time length in the resource occupation manner of the sending node.

In addition, in this aspect, according to the time length in the resource occupation manner, not only a sequence used for sending resource reservation information is determined, but also a frequency used for sending the resource reservation information is determined, which is different from the foregoing Aspect 1 in which different time lengths in all resource occupation manners correspond to a same frequency used for sending resource reservation information.

In this way, in a case in which two or more sending nodes simultaneously send resource reservation information, when resource occupation manners of the two or more sending nodes are different, because sending frequencies of the resource reservation information of the two or more sending nodes are different, mutual interference between the resource reservation information of the two or more sending nodes when the information reaches the receiving node is avoided.

On the other hand, in the case in which two or more sending nodes simultaneously send resource reservation information, when resource occupation manners of the two or more sending nodes are the same, because both frequencies and sequences used for sending the resource reservation information of the two or more sending nodes are the same, the resource reservation information of the two or more sending nodes may be received in a combined manner when reaching the receiving node.

It can be seen that, in this aspect, even in a case in which two or more sending nodes simultaneously send resource reservation information, the resource reservation information of the two or more sending nodes can all be correctly parsed by another node, regardless of whether resource occupation manners of the two or more sending nodes for a shared spectrum are the same.

### Aspect 4

In this aspect, a resource occupation manner mainly includes a time length *L* for which all frequency resources of a shared spectrum is to be occupied, and a sending resource of resource reservation information mainly includes a sequence *S* and a frequency *F* that are used for sending the resource reservation information.

In a possible implementation manner, a combination *S*/*F* of a sequence and a frequency that are used for sending resource reservation information may be separately set for each of time lengths *L*₁ *L₂, ... L_{N}.* For example, a correspondence shown in the following Table 4 may exist between a resource occupation manner and a sending resource of resource reservation information, where N is an integer greater than or equal to 2.

**Table 4: Correspondence between a resource occupation manner and a sending resource of resource reservation information**

| | | | | |
|---|---|---|---|---|
| Time length *L* in the resource occupation manner | *L*₁ | *L*₂ | ... | *L_{N}* |
| Sequence *S* in the sending resource of resource reservation information | *S*₁ | *S*₂ | ... | *S_{N}* |
| Frequency *F* in the sending resource of resource reservation information | *Fₓ* | *Fₓ* | ... | *Fₓ* |

According to the preset correspondence in the foregoing Table 4, if the time length in the resource occupation manner is *L*₁, the sending node may use a sequence *S*₁ and a frequency *Fₓ* to send the resource reservation information; if the time length in the resource occupation manner is *L*₂, the sending node may use a sequence *S*₂ and a frequency *Fₓ* to send the resource reservation information; ... and if the time length in the resource occupation manner is *L_{N},* the sending node uses a *sequence S_{N}* and a frequency *Fₓ* to send the resource reservation information.

The frequency *Fₓ* used for sending resource reservation information may be any one of M frequencies *F*₁, *F₂*, ... *F_{M},* every two of which are completely orthogonal or partially orthogonal, where M is an integer greater than or equal to 1. In a possible implementation manner, the frequencies *F*₁*, F₂*, ... *F_{M}* may be particular frequencies in the shared spectrum. In another possible implementation manner, some or all of the frequencies *F*₁, *F₂*, ... *F_{M}* may be particular frequencies that do not belong to the shared spectrum.

In this way, in this aspect, the sending node may determine, based on a time length *Lₓ* in the resource occupation manner of the node for the shared spectrum and with reference to the foregoing correspondence table, a sequence and a frequency that are used for sending resource reservation information, and send the resource reservation information by sending the determined sequence on the determined frequency, so that the receiving node can learn, based on the sequence and the frequency that are used for sending the resource reservation information, the resource occupation manner of the sending node for the shared spectrum.

For example, the receiving node may separately perform, on the frequency resources *F*₁, *F*₂, ... *F_{N}* used for sending resource reservation information, blind detection on a sequence *Sₓ* used for sending resource reservation information, that is, perform correlation detection one by one on a sequence received on the preset frequency resources *F*₁*, F*₂*,* ... *F_{N}* used for sending resource reservation information and the sequences *S*₁, *S*₂, *... S_{N},* to find the frequency and the sequence that are used for sending the received resource reservation information, and determine, based on a detection result, the time length *Lₓ* for which the sending node occupies the shared spectrum.

In addition, the sequences *S*₁, *S*₂, ... *S_{N}* used for sending resource reservation information may be N sequences with good auto-correlation and poor cross-correlation. For example, in a possible implementation manner, the sequences *S*₁, *S*₂, ... *S_{N}* may be CAZAC sequences.

In this way, similar to the foregoing Aspect 1 to Aspect 3, in this aspect, because the sending node uses, based on the preset correspondence between a resource occupation manner and a sending resource of resource reservation information, a particular sequence and frequency to send the resource reservation information, which is irrelevant to factors such as system encryption processing and cell identity scrambling processing, even if the receiving node and the sending node belong to different wireless communications systems and/or different operators, the receiving node can still correctly parse out, based on the foregoing preset correspondence, a time length in the resource occupation manner of the sending node.

In addition, in this aspect, according to the time length in the resource occupation manner, not only a sequence used for sending resource reservation information is determined, but also a frequency used for sending the resource reservation information is determined, which is different from the foregoing Embodiment 1 in which different time lengths in all resource occupation manners correspond to a same frequency used for sending resource reservation information.

In this way, in a case in which two or more sending nodes simultaneously send resource reservation information, when resource occupation manners of the two or more sending nodes for the shared spectrum are different, because sequences used for sending the resource reservation information of the two or more sending nodes are different, even if frequencies of the resource reservation information of the two or more sending nodes are the same, mutual interference between the resource reservation information of the two or more sending nodes when the information reaches the receiving node may still be avoided.

On the other hand, in the case in which two or more sending nodes simultaneously send resource reservation information, when resource occupation manners of the two or more sending nodes for the shared spectrum are the same, because sequences used for sending the resource reservation information of the two or more sending nodes are the same, if frequencies of the resource reservation information of the two or more sending nodes are also the same, the resource reservation information of the two or more sending nodes may be received in a combined manner when reaching the receiving node; or if frequencies of the resource reservation information of the two or more sending nodes are different, mutual interference between the resource reservation information of the two or more sending nodes when the information reaches the receiving node can be avoided.

It can be seen that, in this aspect, even in a case in which two or more sending nodes simultaneously send resource reservation information, the resource reservation information of the two or more sending nodes can all be correctly parsed by another node, regardless of whether resource occupation manners of the two or more sending nodes for a shared spectrum are the same.

### Aspect 5

In this aspect, a resource occupation manner mainly includes a time length L for which all frequency resources of a shared spectrum is to be occupied, and a sending resource of resource reservation information mainly includes a sequence *S* and a frequency *F* that are used for sending the resource reservation information.

In a possible implementation manner, a combination *S*/*F* of a sequence and a frequency that are used for sending resource reservation information may be separately set for each of time lengths *L*₁ *L₂, ... L_{N}.* For example, a correspondence shown in the following Table 5 may exist between a resource occupation manner and a sending resource of resource reservation information, where N is an integer greater than or equal to 2.

**Table 5: Correspondence between a resource occupation manner and a sending resource of resource reservation information**

| | | | | | | | |
|---|---|---|---|---|---|---|---|
| *T*ime length *L* in the resource occupation manner | *L*₁ | | *L*₂ | | ... | *L_{N}* | |
| Sequence *S* in the sending resource of resource reservation information | *S*₁₁ | *S*₁₂ | *S*₂₁ | *S*₂₂ | ... | *S*_{*N*1} | *S*_{*N*2} |
| Frequency *F* in the sending resource of resource reservation information | *F*₁₁ | *F*₁₂ | *F*₂₁ | *F*₂₂ | ... | *F*_{*N*1} | *F*_{*N*2} |

According to the preset correspondence in the foregoing Table 5, if the time length in the resource occupation manner is *L*₁, the sending node may use a sequence *S*₁₁ and a frequency *F*₁₁*,* or a sequence *S*₁₂ and a frequency *F*₁₂ to send the resource reservation information; if the time length in the resource occupation manner is *L*₂*,* the sending node may use a sequence *S*₂₁ and a frequency *F*₂₁*,* or a sequence *S*₂₂ and a frequency *F*₂₂ to send the resource reservation information; ... and if the time length in the resource occupation manner is *L_{N}*, the sending node uses a sequence *S*_{*N*1} and a frequency *F*_{*N*1}*,* or a sequence *S*_{*N*2} and a frequency *S*_{*N*2} to send the resource reservation information.

The frequencies *F*₁₁, *F*₁₂, *F*₂₁, *F*₂₂, ... *F*_{*N*1}*, F*_{*N*2} used for sending resource reservation information may be 2N frequencies, every two of which are completely orthogonal or partially orthogonal. In a possible implementation manner, the frequencies *F*₁₁, *F*₁₂, *F*₂₁, *F*₂₂, ... *F*_{*N*1}, *F*_{*N*2} may be particular frequencies in the shared spectrum. In another possible implementation manner, some or all of the frequencies *F*₁₁, *F*₁₂, *F*₂₁, *F*₂₂, ... *F*_{*N*1}, *F*_{*N*2} may be particular frequencies that do not belong to the shared spectrum.

In this way, in this aspect, the sending node may determine, based on a time length *Lₓ* in the resource occupation manner of the node for the shared spectrum and with reference to the foregoing correspondence table, a sequence and a frequency that are used for sending resource reservation information, and send the resource reservation information by sending the determined sequence on the determined frequency, so that the receiving node can learn, based on the sequence and the frequency that are used for sending the resource reservation information, the resource occupation manner of the sending node for the shared spectrum.

For example, the receiving node may separately perform, on the frequencies *F*₁₁, *F*₁₂, *F*₂₁, *F*₂₂, ... *F*_{*N*1}*, F*_{*N*2} used for sending resource reservation information, blind detection on sequences *S*₁₁, *S*₁₂, *S*₂₁, *S*₂₂, ... *S*_{*N*1}*, S*_{*N*2} used for sending resource reservation information, that is, perform correlation detection one by one on a sequence received on the preset frequencies *F*₁₁, *F*₁₂, *F*₂₁, *F*₂₂, ... *F*_{*N*1}*, F*_{*N*2} used for sending resource reservation information and the sequences *S*₁₁, *S*₁₂, *S*₂₁, *S*₂₂, ... *S*_{*N*1}, *S*_{*N*2}*,* to find the frequency and the sequence that are used for sending the received resource reservation information, and determine, based on a detection result, the time length *Lₓ* for which the sending node occupies the shared spectrum.

In addition, the sequences *S*₁₁, *S*₁₂, *S*₂₁, *S*₂₂, ... *S*_{*N*1}*, S*_{*N*2} used for sending resource reservation information may be 2N sequences with good auto-correlation and poor cross-correlation. For example, in a possible implementation manner, the sequences *S*₁₁, *S*₁₂, *S*₂₁, *S*₂₂, ... *S*_{*N*1}, *S*_{*N*2} may be CAZAC sequences.

In this way, similar to the foregoing Aspect 1 to Aspect 4, in this aspect, because the sending node uses, based on the preset correspondence between a resource occupation manner for a shared spectrum and a sending resource of resource reservation information, one of the particular sequences *S*₁₁, *S*₁₂, *S*₂₁*, S*₂₂*,* ... *S*_{*N*1}*, S*_{*N*2} to send the resource reservation information, which is irrelevant to factors such as system encryption processing and cell identity scrambling processing, even if the receiving node and the sending node belong to different wireless communications systems and/or different operators, the receiving node can still correctly parse out, based on the foregoing preset correspondence, a time length in the resource occupation manner of the sending node.

In addition, in this aspect, according to the time length in the resource occupation manner, not only a sequence used for sending resource reservation information is determined, but also a frequency used for sending the resource reservation information is determined, which is different from the foregoing Aspect 1 in which different time lengths in all resource occupation manners correspond to a same frequency used for sending resource reservation information.

In this way, in a case in which two or more sending nodes simultaneously send resource reservation information, when resource occupation manners of the two or more sending nodes are different, because both sequences and frequencies of the resource reservation information of the two or more sending nodes are different, mutual interference between the resource reservation information of the two or more sending nodes when the information reaches the receiving node can be avoided.

On the other hand, in the case in which two or more sending nodes simultaneously send resource reservation information, when resource occupation manners of the two or more sending nodes are the same, if both sequences and frequencies of the resource reservation information of the two or more sending nodes are the same, the resource reservation information of the two or more sending nodes may be received in a combined manner when reaching the receiving node; or if both sequences and frequencies of the resource reservation information of the two or more sending nodes are different, mutual interference between the resource reservation information of the two or more sending nodes when the information reaches the receiving node can be avoided.

It can be seen that, in this aspect, even in a case in which two or more sending nodes simultaneously send resource reservation information, the resource reservation information of the two or more sending nodes can all be correctly parsed by another node, regardless of whether resource occupation manners of the two or more sending nodes for a shared spectrum are the same.

### Aspect 6

In the foregoing Aspect 1 to Aspect 5, a resource occupation manner mainly refers to how long a node occupies all frequency resources of a shared spectrum. That is, a time length *L* may be construed as duration for which an entire frequency range *B_{T}* of the shared spectrum is to be occupied. However, in a possible implementation manner, a communications node may occupy only a part *B* of the frequency range of the shared spectrum, where *B*<*B_{T}.*

For example, in this aspect, the resource occupation manner mainly refers to the time length *L* for which the node is going to occupy the particular frequency range *B* of the shared spectrum, and the frequency range *B* may be less than or equal to the entire frequency range *B_{T}* of the shared spectrum, thereby improving use efficiency of the shared spectrum.

In a specific possible implementation manner, a sequence *S* used for sending resource reservation information may be separately set for each of combinations *B*₁/*L*₁*, B*₂/*L*₂*,* ... *B_{N}*/*L_{N}* of a frequency range and a time length in the resource occupation manner. For example, a correspondence shown in the following Table 6 may exist between a resource occupation manner and a sending resource of resource reservation information, where K is an integer greater than or equal to 2, and N is an integer greater than or equal to 2.

**Table 6: Correspondence between a resource occupation manner and a sending resource of resource reservation information**

| Frequency range *B* in the resource occupation manner | *B*₁ | | | | ... | *B_{K}* | | | |
|---|---|---|---|---|---|---|---|---|---|
| Time length *L* in the resource occupation manner | *L*₁ | *L*₂ | ... | *L_{N}* | ... | *L*₁ | *L*₂ | ... | *L_{N}* |
| Sequence *S* in the sending resource of resource reservation information | *S*₁₁ | *S*₁₂ | | *S*_{1*N*} | ... | *S*_{*K*1} | *S*_{*K*2} | | *S_{KN}* |

According to the preset correspondence in the foregoing Table 6, if in the resource occupation manner, the frequency range is *B*₁ and the time length is *L*₁, the sending node uses a sequence *S*₁₁ to send the resource reservation information; if in the resource occupation manner, the frequency range is *B*₁ and the time length is *L*₂, the sending node uses a sequence *S*₁₂ to send the resource reservation information; ... and if in the resource occupation manner, the frequency range is *B*₁ and the time length is *L_{N}*, the sending node uses a sequence *S*_{1*N*} to send the resource reservation information. The rest may be deduced by analogy. If in the resource occupation manner, the frequency range is *B_{K}* and the time length is *L*₁, the sending node uses a sequence *S*_{*K*1} to send the resource reservation information; if in the resource occupation manner, the frequency range is *B_{K}* and the time length is *L*₂*,* the sending node uses a sequence *S*_{*K*2} to send the resource reservation information; ... and if in the resource occupation manner, the frequency range is *B_{K}* and the time length is *L_{N}*, the sending node uses a sequence *S_{KN}* to send the resource reservation information.

Sequences *S*₁₁, *S*₁₂, ... *S*₁*_{N}, S*₂₁, *S*₂₂, ... *S*₂*_{N},* ... *S*_{*K*1}*, S*_{*K*2}, ... *S_{KN}* used for sending resource reservation information may be *K×N* sequences with good auto-correlation and poor cross-correlation. For example, in a possible implementation manner, the sequences *S*₁₁, *S*₁₂, ... *S*₁*_{N}, S*₂₁*, S*₂₂*,* ... *S*₂*_{N}, ... S*_{*K*1}*, S*_{*K*2}*, ... S_{KN}* may be CAZAC sequences.

In this way, similar to the foregoing Aspect 1, the sending node may determine, based on the frequency range and the time length in the resource occupation manner of the node and with reference to foregoing correspondence table, a sequence used for sending resource reservation information, and send the resource reservation information by sending the determined sequence, so that a receiving node can learn, based on the used sequence, the resource occupation manner of the sending node for the shared spectrum.

In a possible implementation manner, the frequency used for sending resource reservation information may be a preset frequency resource. For example, the receiving node may perform, on the preset frequency resource, blind detection on the sequences *S*₁₁, *S*₁₂, ... *S*_{1*N*}, *S*₂₂, ... *S*_{2*N*}, ... *S*_{*K*1}*, S*_{*K*2}, ... *S_{KN},* that is, perform correlation detection one by one on a sequence received on the preset frequency resource and the sequences *S*₁₁, *S*₁₂, ... *S*_{1*N*}, *S*₂₁, *S*_{22,} ... *S*_{2*N*}, ... *S*_{*K*1}, *S*_{*K*2}*,* ... *S_{KN},* to find the received sequence is which one or more of the sequences *S*₁₁, *S*₁₂, ... *S*_{1*N*}, *S*₂₁, *S*₂₂, ... *S*_{2*N*}, ... *S*_{*K*1}*, S*_{*K*2}, ... *S_{KN}*, and determine, based on a detection result, a frequency range and a time length for which the sending node occupies the shared spectrum.

In this way, similar to the foregoing Aspect 1, because the sending node uses, based on the preset correspondence between a resource occupation manner and a sending resource of resource reservation information, one of the particular sequences *S*₁₁, *S*₁₂, ... *S*_{1N}, *S*₂₁, *S*₂₂, ... *S*_{2*N*}, ... *S*_{*K*1}, *S*_{*K*2}*, ... S_{KN}* to send the resource reservation information, which is irrelevant to factors such as system encryption processing and cell identity scrambling processing, even if the receiving node and the sending node belong to different wireless communications systems and/or different operators, the receiving node can still correctly parse out, based on the foregoing preset correspondence, the time length and the frequency range in the resource occupation manner of the sending node.

In another specific possible implementation manner, a combination *S*/*F* of a sequence and a frequency that are used for sending resource reservation information may be separately set for each of combinations *B*₁/*L*₁, *B*₂/L₂, ... *B_{N}*/*L_{N}* of a frequency range and a time length in the resource occupation manner. For example, a correspondence shown in the following Table 7 may exist between a resource occupation manner and a sending resource of resource reservation information, where K is an integer greater than or equal to 2, and N is an integer greater than or equal to 2.

According to the preset correspondence in the following Table 7, if in the resource occupation manner, the frequency range is *B*₁ and the time length is *L*₁, the sending node uses a sequence *S*₁₁ and a frequency *F*₁₁ to send the resource reservation information; if in the resource occupation manner, the frequency range is *B*₁ and the time length is *L*₂*,* the sending node uses a sequence *S*₁₂ and a frequency *F*₁₂ to send the resource reservation information; ... and if in the resource occupation manner, the frequency range is *B*₁ and the time length is *L_{N},* the sending node uses a sequence *S*_{1*N*} and a frequency *F*_{1*N*} to send the resource reservation information. The rest may be deduced by analogy. If in the resource occupation manner, the frequency range is *B_{K}* and the time length is *L*₁, the sending node uses a sequence *S*_{*K*1} and a frequency *F*_{*K*1} to send the resource reservation information; if in the resource occupation manner, the frequency range is *B_{K}* and the time length is *L*₂*,* the sending node uses a sequence *S*_{*K*2} and a frequency *F*_{*K*2} to send the resource reservation information; ... and if in the resource occupation manner, the frequency range is *B_{K}* and the time length is *L_{N}*, the sending node uses a sequence *S_{KN}* and a frequency *F_{KN}* to send the resource reservation information.

**Table 7: Correspondence between a resource occupation manner and a sending resource of resource reservation information**

| Frequency range *B* in the resource occupation manner | *B*₁ | | | | ... | *B_{K}* | | | |
|---|---|---|---|---|---|---|---|---|---|
| Time length *L* in the resource occupation manner | *L*₁ | *L*₂ | ... | *L_{N}* | ... | *L*₁ | *L*₂ | ... | *L_{N}* |
| Sequence *S* in the sending resource of resource reservation information | *S*₁₁ | *S*₁₂ | | *S*_{1*N*} | ... | *S*_{*K*1} | *S*_{*K*2} | | *S_{KN}* |
| Frequency *F* in the sending resource of resource reservation information | *F*₁₁ | *F*₁₂ | | *F*_{1*N*} | ... | *F*_{*K*1} | *F*_{*K*2} | | *F_{KN}* |

The frequencies *F*₁₁, *F*₁₂, ... *F*_{1*N*}, *F*₂₁, *F*₂₂, ... *F*_{2*N*}, ... *F*_{*K*1}, *F*_{*K*2,} ... *F_{KN}* used for sending resource reservation information may be *K×N* frequencies, every two of which are completely orthogonal or partially orthogonal. In a possible implementation manner, the frequencies *F*₁₁, *F*₁₂, ... *F*_{1*N*}, *F*₂₁, *F*₂₂, ... *F*_{2*N*}, ... *F*_{*K*1}, *F*_{*K*2}, ... *F_{KN}* may be particular frequencies in the shared spectrum. In another possible implementation manner, some or all of the frequencies *F*₁₁, *F*₁₂, ... *F*_{1*N*}, *F*₂₁, *F*₂₂, ... *F*_{2*N*}, ... *F*_{*K*1}, *F*_{*K*2}, ... *F_{KN}* may be particular frequencies that do not belong to the shared spectrum.

In addition, the sequences *S*₁₁, *S*₁₂, ... *S*_{1*N*}, *S*₂₂, ... *S*_{2*N*}, ... *S*_{*K*1}, *S*_{*K*2}, ... *S_{KN}* used for sending resource reservation information may be *K×N* sequences with good auto-correlation and poor cross-correlation. For example, in a possible implementation manner, the sequences *S*₁₁, *S*₁₂, ... *S*_{1*N*}, *S*₂₁, *S*₂₂, ... *S*_{2*N*}, ... *S*_{*K*2}, ... *S_{KN}* may be CAZAC sequences.

In this way, similar to the foregoing Aspect 2, in this aspect, because the sending node uses, based on the preset correspondence between a resource occupation manner and a sending resource of resource reservation information, one of the particular sequences *S*₁₁, *S*₁₂, ... *S*₁*_{N}, S*₂₁, *S*₂₂, ... *S*_{2*N*}, ... *S*_{*K*1}*, S*_{*K*2,} ... *S_{KN}* to send the resource reservation information, which is irrelevant to factors such as system encryption processing and cell identity scrambling processing, even if the receiving node and the sending node belong to different wireless communications systems and/or different operators, the receiving node can still correctly parse out, based on the foregoing preset correspondence, the time length and the frequency range in the resource occupation manner of the sending node.

### Aspect 7

FIG. 2 shows a structural block diagram of a device for occupying a shared spectrum according to an aspect of the present invention. As shown in FIG. 2, the device 200, used in a first communications node, for occupying a shared spectrum according to this embodiment of the present invention mainly includes a determining unit 210 and a sending unit 220. The first communications node shares a spectrum resource such as an unlicensed spectrum with another communications node, and the first communications node is mainly used as a sending node that releases a resource occupation manner of the first communications node for the shared spectrum, so that the another communications node can learn a use status of the first communications node for the shared spectrum.

Specifically, the determining unit 210 is mainly configured to determine, according to the resource occupation manner to be performed by the first communications node for the shared spectrum, a sending resource of resource reservation information by using a preset correspondence. The correspondence mainly includes a relationship between at least two resource occupation manner and at least two sending resource, and the resource reservation information represents the resource occupation manner. The sending unit 220 is mainly configured to send the resource reservation information by using the sending resource determined by the determining unit 210, so that the another communications node can parse the sending resource of the resource reservation information, and determine, according to the correspondence, the resource occupation manner of the first communications node for the shared spectrum.

In this way, because the determining unit 210 uses, with reference to a preset correspondence between the resource occupation manner and the sending resource of the resource reservation information, a particular sending resource to indicate a resource occupation manner to be performed by a first communications node for a shared spectrum, instead of adding the resource reservation information to a transmit signal, another communications node can learn, by parsing the sending resource of the received resource reservation information and with reference to the preset correspondence, the resource occupation manner of the first communications node for the shared spectrum, without the need of demodulating signal content of the resource reservation information. Therefore, even in a case in which the first communications node shares a shared spectrum such as an unlicensed spectrum with another communications node belonging to a different wireless communications system and/or a different operator, the another communications node can still accurately learn a use status of the first communications node for the shared spectrum.

In a possible implementation manner, the resource occupation manner may include a time length for which a part of a frequency range or an entire frequency range of the shared spectrum is to be occupied. Correspondingly, the correspondence may mainly include a correspondence between at least two of the time length and the at least two of the sending resource.

In addition, in a specific possible implementation manner, the resource occupation manner may further include a frequency range of the shared spectrum to be occupied, and the frequency range may be less than or equal to the entire frequency range of the shared spectrum. Correspondingly, the correspondence may mainly include a correspondence between at least two combinations of the time length and the frequency range and the at least two of the sending resource.

In a possible implementation manner, the sending resource may include at least two particular sequences used for sending the resource reservation information, where auto-correlation of each of the sequences is good, and cross-correlation of every two of the sequences is poor, for example, the sequence may be a CAZAC sequence. Correspondingly, the correspondence may mainly include a correspondence between the at least two of the resource occupation manner and at least two of the sequences.

In addition, in a specific possible implementation manner, the sending resource may further include at least two particular frequencies used for sending the resource reservation information, where every two of the frequencies are completely orthogonal or partially orthogonal. Correspondingly, the correspondence may mainly include a correspondence between at least two combinations of the sequences and the frequencies and the at least two of the resource occupation manner.

### Aspect 8

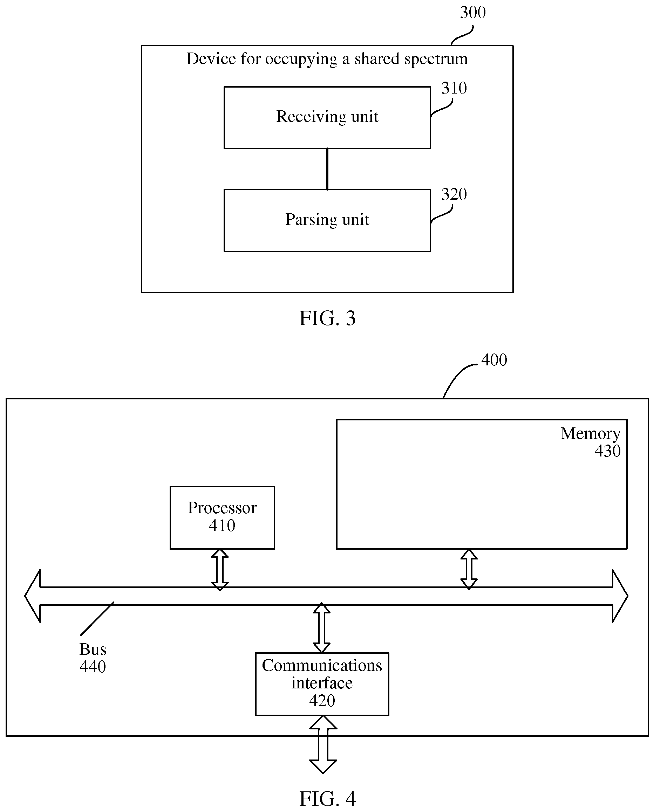

FIG. 3 shows a structural block diagram of a device for occupying a shared spectrum according to another aspect of the present invention. As shown in FIG. 3, the device 300, used in a second communications node, for occupying a shared spectrum according to this aspect of the present invention mainly includes a receiving unit 310 and a parsing unit 320. The second communications node shares a spectrum resource such as an unlicensed spectrum with another communications node, and the second communications node is mainly used as a receiving node that receives resource reservation information released by the another communications node, so that the second communications node can learn a use status of the another communications node for the shared spectrum.

Specifically, the receiving unit 310 is mainly configured to receive resource reservation information from the another communications node. The resource reservation information represents a resource occupation manner to be performed by the another communications node for the shared spectrum. The parsing unit 320 is mainly configured to parse a sending resource of the resource reservation information received by the receiving unit 310, and determine, by using a preset correspondence, the resource occupation manner of the another communications node for the shared spectrum. The correspondence mainly includes a relationship between at least two resource occupation manner and at least two sending resource.

In this way, the parsing unit 320 can learn, by parsing the sending resource of the resource reservation information received by the second communications node and with reference to the preset correspondence between the resource occupation manner and the sending resource of the resource reservation information, the resource occupation manner of the another communications node for the shared spectrum, without the need of demodulating signal content of the resource reservation information. Therefore, even in a case in which the second communications node shares a shared spectrum such as an unlicensed spectrum with another communications node belonging to a different wireless communications system and/or a different operator, the second communications node can still accurately learn a use status of the another communications node for the shared spectrum.

In a possible implementation manner, the resource occupation manner may include a time length for which a part of a frequency range or an entire frequency range of the shared spectrum is to be occupied. Correspondingly, the correspondence may mainly include a correspondence between at least two of the time length and the at least two of the sending resource.

In addition, in a specific possible implementation manner, the occupation manner may further include a frequency range of the shared spectrum to be occupied, and the frequency range may be less than or equal to the entire frequency range of the shared spectrum. Correspondingly, the correspondence may mainly include a correspondence between at least two combinations of the time length and the frequency range and the at least two of the sending resource.

In a possible implementation manner, the sending resource may include at least two particular sequences used for sending the resource reservation information, where auto-correlation of each of the sequences is good, and cross-correlation of every two of the sequences is poor, for example, the sequence may be a CAZAC sequence. Correspondingly, the correspondence may mainly include a correspondence between the at least two of the resource occupation manner and at least two of the sequences.

In addition, in a specific possible implementation manner, the sending resource may further include at least two particular frequencies used for sending the resource reservation information, where every two of the frequencies are completely orthogonal or partially orthogonal. Correspondingly, the correspondence may mainly include a correspondence between at least two combinations of the sequences and the frequencies and the at least two of the resource occupation manner.

### Aspect 9

FIG. 4 shows a structural block diagram of a device for occupying a shared spectrum according to still another aspect of the present invention. The device 400 for occupying a shared spectrum may be a host server with a computing capability, a personal computer PC, or a portable computer or terminal that can be carried. The specific aspect of the present invention does not limit a specific implementation of a computing node.

The device 400 for occupying a shared spectrum includes a processor (processor) 410, a communications interface (Communications Interface) 420, a memory (memory) 430, and a bus 440. The processor 410, the communications interface 420, and the memory 430 complete mutual communication by using the bus 440.

The communications interface 420 is configured to communicate with a network device, where the network device includes, for example, a virtual machine management center or a shared storage.

The processor 410 is configured to execute a program. The processor 410 may be a central processing unit CPU, or an application specific integrated circuit (Application Specific Integrated Circuit, ASIC), or configured as one or more integrated circuits for implementing this embodiment of the present invention.

The memory 430 is configured to store a file. The memory 430 may include a high speed RAM memory, or may further include a non-volatile memory (non-volatile memory), for example, at least one magnetic disk memory. The memory 430 may also be a memory array. The memory 430 may further be divided into blocks, and the blocks may be combined into a virtual volume according to a specific rule.

In a possible implementation manner, the memory 430 stores program code including a computer operation instruction, and the processor 410 invokes the program code stored in the memory 430 to perform the following steps:
determining, according to a resource occupation manner to be performed by a first communications node for a shared spectrum, a sending resource of resource reservation information by using a preset correspondence, where the correspondence includes a relationship between at least two resource occupation manner and at least two sending resource, and the resource reservation information represents the resource occupation manner; and
sending the resource reservation information by using the sending resource, so that a second communications node parses the sending resource of the resource reservation information, and determines, by using the correspondence, the resource occupation manner of the first communications node for the shared spectrum.

In a possible implementation manner, the resource occupation manner may include a time length for which a part of a frequency range or an entire frequency range of the shared spectrum is to be occupied. Correspondingly, the correspondence may mainly include a correspondence between at least two of the time length and the at least two of the sending resource.

In addition, in a specific possible implementation manner, the occupation manner may further include a frequency range of the shared spectrum to be occupied, and the frequency range may be less than or equal to the entire frequency range of the shared spectrum. Correspondingly, the correspondence may mainly include a correspondence between at least two combinations of the time length and the frequency range and the at least two of the sending resource.

In a possible implementation manner, the sending resource may include at least two particular sequences used for sending the resource reservation information, where auto-correlation of each of the sequences is good, and cross-correlation of every two of the sequences is poor, for example, the sequence may be a CAZAC sequence. Correspondingly, the correspondence may mainly include a correspondence between the at least two of the resource occupation manner and at least two of the sequences.

In addition, in a specific possible implementation manner, the sending resource may further include at least two particular frequencies used for sending the resource reservation information, where every two of the frequencies are completely orthogonal or partially orthogonal. Correspondingly, the correspondence may mainly include a correspondence between at least two combinations of the sequences and the frequencies and the at least two of the resource occupation manner.

### Aspect 10

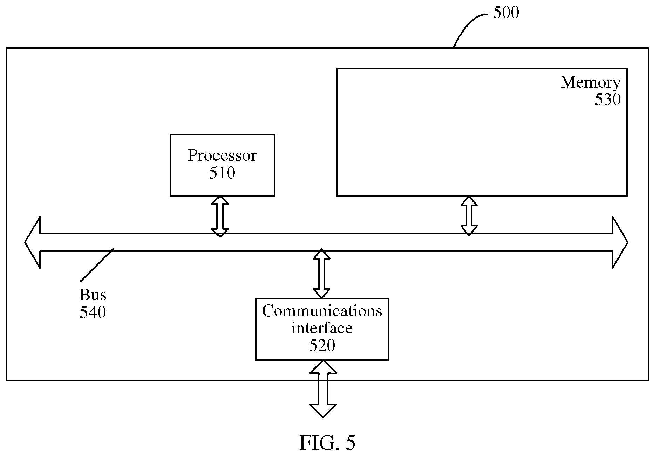

FIG. 5 shows a structural block diagram of a device for occupying a shared spectrum according to yet another aspect of the present invention. The device 500 for occupying a shared spectrum may be a host server with a computing capability, a personal computer PC, or a portable computer or terminal that can be carried. The specific embodiment of the present invention does not limit a specific implementation of a computing node.

The device 500 for occupying a shared spectrum includes a processor (processor) 510, a communications interface (Communications Interface) 520, a memory (memory) 530, and a bus 540. The processor 510, the communications interface 520, and the memory 530 complete mutual communication by using the bus 540.

The communications interface 520 is configured to communicate with a network device, where the network device includes, for example, a virtual machine management center or a shared storage.

The processor 510 is configured to execute a program. The processor 510 may be a central processing unit CPU, or an application specific integrated circuit (Application Specific Integrated Circuit, ASIC), or configured as one or more integrated circuits for implementing this embodiment of the present invention.

The memory 530 is configured to store a file. The memory 530 may include a high speed RAM memory, or may further include a non-volatile memory (non-volatile memory), for example, at least one magnetic disk memory. The memory 330 may also be a memory array. The memory 530 may further be divided into blocks, and the blocks may be combined into a virtual volume according to a rule.

In a possible implementation manner, the memory 530 stores program code including a computer operation instruction, and the processor 510 invokes the program code stored in the memory 530 to perform the following steps:
receiving resource reservation information from a first communications node, where the resource reservation information represents a resource occupation manner to be performed by the first communications node for a shared spectrum; and
parsing a sending resource of the resource reservation information, and determining, by using a preset correspondence, the resource occupation manner of the first communications node for the shared spectrum, where the correspondence includes a relationship between at least two resource occupation manner and at least two sending resource

In a possible implementation manner, the resource occupation manner may include a time length for which a part of a frequency range or an entire frequency range of the shared spectrum is to be occupied. Correspondingly, the correspondence may mainly include a correspondence between at least two of the time length and the at least two of the sending resource.

In addition, in a specific possible implementation manner, the occupation manner may further include a frequency range of the shared spectrum to be occupied, and the frequency range may be less than or equal to the entire frequency range of the shared spectrum. Correspondingly, the correspondence may mainly include a correspondence between at least two combinations of the time length and the frequency range and the at least two of the sending resource.

In a possible implementation manner, the sending resource may include at least two particular sequences used for sending the resource reservation information, where auto-correlation of each of the sequences is good, and cross-correlation of every two of the sequences is poor, for example, the sequence may be a CAZAC sequence. Correspondingly, the correspondence may mainly include a correspondence between the at least two of the resource occupation manner and at least two of the sequences.

In addition, in a specific possible implementation manner, the sending resource may further include at least two particular frequencies used for sending the resource reservation information, where every two of the frequencies are completely orthogonal or partially orthogonal. Correspondingly, the correspondence may mainly include a correspondence between at least two combinations of the sequences and the frequencies and the at least two of the resource occupation manner.

A person of ordinary skill in the art may be aware that, exemplary units and algorithm steps in the embodiments described in this specification may be implemented by electronic hardware or a combination of computer software and electronic hardware. Whether the functions are implemented by hardware or software depends on particular applications and design constraint conditions of the technical solutions. A person skilled in the art may select different methods to implement the described functions for a particular application, but it should not be considered that the implementation goes beyond the scope of the present invention.

If the functions are implemented in a form of computer software and sold or used as an independent product, it can be deemed to some extent that all or some of the technical solutions of the present invention (for example, the part contributing to the prior art) are implemented in a form of a computer software product. The computer software product is generally stored in a computer readable non-volatile storage medium and includes several instructions for instructing a computer device (which may be a personal computer, a server, or a network device, and the like) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

### Practicability

The method and the device for occupying a shared spectrum according to the aspects of the present invention may be applied to the field of wireless communications technologies, and is particularly applicable to a case in which a spectrum resource such as an unlicensed spectrum is shared between different wireless communications systems and/or different operators, which can effectively reduce use conflicts of a shared spectrum.

## Claims

1. A method for occupying a shared spectrum, the method comprising:
determining (S110), by a first communications node according to a resource occupation manner of the first communications node for a shared spectrum, a sending resource of resource reservation information by using a preset correspondence, wherein the preset correspondence comprises a relationship between at least two resource occupation manners and at least two sending resources, and the resource reservation information represents the resource occupation manner; and
sending (S120), by the first communications node, the resource reservation information by using the sending resource, to a second communications node;
wherein the resource occupation manner comprises a time length for which the shared spectrum is to be occupied; and the preset correspondence comprises a correspondence between at least two time lengths and the at least two sending resources.

2. The method for occupying a shared spectrum according to claim 1, wherein
the resource occupation manner further comprises a frequency range of the shared spectrum to be occupied, and the frequency range is less than or equal to an entire frequency range of the shared spectrum; and
the preset correspondence comprises a correspondence between at least two combinations of time length and frequency range and the at least two sending resources.

3. The method for occupying a shared spectrum according to claim 1 or 2, wherein
the sending resource comprises at least two sequences used for sending the resource reservation information, wherein auto-correlation of each of the sequences is good, and cross-correlation of every two of the sequences is poor; and
the preset correspondence comprises a correspondence between the at least two resource occupation manners and the at least two sequences;
wherein the sequence is a constant amplitude zero auto-correlation, CAZAC, sequence.

4. The method for occupying a shared spectrum according to claim 3, wherein
the sending resource further comprises at least two frequencies used for sending the resource reservation information, and every two of the frequencies are completely orthogonal or partially orthogonal; and
the preset correspondence comprises a correspondence between at least two combinations of the sequences and the frequencies and the at least two resource occupation manners.

5. A method for occupying a shared spectrum, the method comprising:
receiving (S130), by a second communications node, resource reservation information from a first communications node, wherein the resource reservation information represents a resource occupation manner of the first communications node for a shared spectrum; and
parsing (S140), by the second communications node, a sending resource of the resource reservation information, and determining, by using a preset correspondence, the resource occupation manner of the first communications node for the shared spectrum, wherein the preset correspondence comprises a relationship between at least two resource occupation manners and at least two sending resources;
wherein the resource occupation manner comprises a time length for which the shared spectrum is to be occupied; and the preset correspondence comprises a correspondence between at least two time lengths and the at least two sending resources.

6. The method for occupying a shared spectrum according to claim 5, wherein
the resource occupation manner further comprises a frequency range of the shared spectrum to be occupied, and the frequency range is less than or equal to an entire frequency range of the shared spectrum; and
the preset correspondence comprises a correspondence between at least two combinations of time length and frequency range and the at least two sending resources.

7. The method for occupying a shared spectrum according to claim 5 or 6, wherein
the sending resource comprises at least two sequences used for sending the resource reservation information, wherein auto-correlation of each of the sequences is good, and cross-correlation of every two of the sequences is poor; and
the preset correspondence comprises a correspondence between the at least two resource occupation manners and the at least two sequences;
wherein the sequence is a constant amplitude zero auto-correlation, CAZAC, sequence.

8. The method for occupying a shared spectrum according to claim 7, wherein
the sending resource further comprises at least two frequencies used for sending the resource reservation information, and every two of the frequencies are completely orthogonal or partially orthogonal; and
the preset correspondence comprises a correspondence between at least two combinations of the sequences and the frequencies and the at least two resource occupation manners.

9. A device for occupying a shared spectrum, for use in a first communications node, the device comprising:
a determining unit (210), adapted to determine, according to a resource occupation manner of the first communications node for a shared spectrum, a sending resource of resource reservation information by using a preset correspondence, wherein the preset correspondence comprises a relationship between at least two resource occupation manners and at least two sending resources, and the resource reservation information represents the resource occupation manner; and
a sending unit (220), adapted to send the resource reservation information by using the sending resource, to a second communications node;
wherein the resource occupation manner comprises a time length for which the shared spectrum is to be occupied; and the preset correspondence comprises a correspondence between at least two time lengths and the at least two sending resources.

10. The device for occupying a shared spectrum according to claim 9, wherein
the resource occupation manner further comprises a frequency range of the shared spectrum to be occupied, and the frequency range is less than or equal to an entire frequency range of the shared spectrum; and
the preset correspondence comprises a correspondence between at least two combinations of time length and frequency range and the at least two sending resources.

11. The device for occupying a shared spectrum according to claim 9 or 10, wherein
the sending resource comprises at least two sequences used for sending the resource reservation information, wherein auto-correlation of each of the sequences is good, and cross-correlation of every two of the sequences is poor; and
the preset correspondence comprises a correspondence between the at least two resource occupation manners and at least two sequences;
wherein
the sequence is a constant amplitude zero auto-correlation, CAZAC, sequence.

12. The device for occupying a shared spectrum according to claim 11, wherein
the sending resource further comprises at least two frequencies used for sending the resource reservation information, and every two of the frequencies are completely orthogonal or partially orthogonal; and
the preset correspondence comprises a correspondence between at least two combinations of the sequences and the frequencies and the at least two resource occupation manners.

## Patentansprüche

1. Verfahren zum Belegen eines gemeinsam verwendeten Spektrums, wobei das Verfahren Folgendes umfasst:
Bestimmen (S110) durch einen ersten Kommunikationsknoten gemäß einer Betriebsmittelbelegungsart des ersten Kommunikationsknotens für ein gemeinsam verwendetes Spektrum eines Sendebetriebsmittels aus Betriebsmittelreservierungsinformationen unter Verwendung einer voreingestellten Zuordnung, wobei die voreingestellte Zuordnung eine Beziehung zwischen wenigstens zwei Betriebsmittelbelegungsarten und wenigstens zwei Sendebetriebsmitteln umfasst und die Betriebsmittelreservierungsinformationen die Betriebsmittelbelegungsart repräsentieren; und
Senden (S120) durch den ersten Kommunikationsknoten der Betriebsmittelreservierungsinformationen unter Verwendung des Sendebetriebsmittels zu einem zweiten Kommunikationsknoten;
wobei die Betriebsmittelbelegungsart eine zeitliche Länge umfasst, für die das gemeinsam verwendete Spektrum belegt werden soll; und die voreingestellte Zuordnung eine Zuordnung zwischen wenigstens zwei zeitlichen Längen und den wenigstens zwei Sendebetriebsmitteln umfasst.

2. Verfahren zum Belegen eines gemeinsam verwendeten Spektrums nach Anspruch 1, wobei
die Betriebsmittelbelegungsart ferner einen Frequenzbereich des gemeinsam verwendeten Spektrums, der belegt werden soll, umfasst und der Frequenzbereich kleiner oder gleich einem gesamten Frequenzbereich des gemeinsam verwendeten Spektrums ist; und
die voreingestellte Zuordnung eine Zuordnung zwischen wenigstens zwei Kombinationen der zeitlichen Länge und des Frequenzbereichs und den wenigstens zwei Sendebetriebsmitteln umfasst.

3. Verfahren zum Belegen eines gemeinsam verwendeten Spektrums nach Anspruch 1 oder 2, wobei
das Sendebetriebsmittel wenigstens zwei Folgen umfasst, die zum Senden der Betriebsmittelreservierungsinformationen verwendet werden, wobei Autokorrelation jeder der Folgen gut ist und Kreuzkorrelation von jeweils zwei aus den Folgen schlecht ist; und
die voreingestellte Zuordnung eine Zuordnung zwischen den wenigstens zwei Betriebsmittelbelegungsarten und den wenigstens zwei Folgen umfasst;
wobei die Folge eine Folge mit konstanter Amplitude und Autokorrelation null, CAZAC-Folge, ist.

4. Verfahren zum Belegen eines gemeinsam verwendeten Spektrums nach Anspruch 3, wobei
das Sendebetriebsmittel ferner wenigstens zwei Frequenzen umfasst, die zum Senden der Betriebsmittelreservierungsinformationen verwendet werden, und jeweils zwei aus den Frequenzen vollständig orthogonal oder teilweise orthogonal sind; und
die voreingestellte Zuordnung eine Zuordnung zwischen wenigstens zwei Kombinationen aus den Folgen und den Frequenzen und den wenigstens zwei Betriebsmittelbelegungsarten umfasst.

5. Verfahren zum Belegen eines gemeinsam verwendeten Spektrums, wobei das Verfahren Folgendes umfasst:
Empfangen (S130) durch einen zweiten Kommunikationsknoten von Betriebsmittelreservierungsinformationen von einem ersten Kommunikationsknoten, wobei die Betriebsmittelreservierungsinformationen eine Betriebsmittelbelegungsart des ersten Kommunikationsknotens für ein gemeinsam verwendetes Spektrum repräsentieren; und
Analysieren (S140) durch den zweiten Kommunikationsknoten eines Sendebetriebsmittels der Betriebsmittelreservierungsinformationen und Bestimmen unter Verwendung einer voreingestellten Zuordnung der Betriebsmittelbelegungsart des ersten Kommunikationsknotens für das gemeinsam verwendete Spektrum, wobei die voreingestellte Zuordnung eine Beziehung zwischen wenigstens zwei Betriebsmittelbelegungsarten und wenigstens zwei Sendebetriebsmitteln umfasst;
wobei die Betriebsmittelbelegungsart eine zeitliche Länge umfasst, für die das gemeinsam verwendete Spektrum belegt werden soll; und die voreingestellte Zuordnung eine Zuordnung zwischen wenigstens zwei zeitlichen Längen und den wenigstens zwei Sendebetriebsmitteln umfasst.

6. Verfahren zum Belegen eines gemeinsam verwendeten Spektrums nach Anspruch 5, wobei
die Betriebsmittelbelegungsart ferner einen Frequenzbereich des gemeinsam verwendeten Spektrums, der belegt werden soll, umfasst und der Frequenzbereich kleiner als ein oder gleich einem gesamten Frequenzbereich des gemeinsam verwendeten Spektrums ist; und
die voreingestellte Zuordnung eine Zuordnung zwischen wenigstens zwei Kombinationen der zeitlichen Länge und des Frequenzbereichs und den wenigstens zwei Sendebetriebsmitteln umfasst.

7. Verfahren zum Belegen eines gemeinsam verwendeten Spektrums nach Anspruch 5 oder 6, wobei
das Sendebetriebsmittel wenigstens zwei Folgen umfasst, die zum Senden der Betriebsmittelreservierungsinformationen verwendet werden, wobei Autokorrelation jeder der Folgen gut ist und Kreuzkorrelation von jeweils zwei aus den Folgen schlecht ist; und
die voreingestellte Zuordnung eine Zuordnung zwischen den wenigstens zwei Betriebsmittelbelegungsarten und den wenigstens zwei Folgen umfasst;
wobei die Folge eine Folge mit konstanter Amplitude und Autokorrelation null, CAZAC-Folge, ist.

8. Verfahren zum Belegen eines gemeinsam verwendeten Spektrums nach Anspruch 7, wobei
das Sendebetriebsmittel ferner wenigstens zwei Frequenzen umfasst, die zum Senden der Betriebsmittelreservierungsinformationen verwendet werden, und jeweils zwei aus den Frequenzen vollständig orthogonal oder teilweise orthogonal sind; und
die voreingestellte Zuordnung eine Zuordnung zwischen wenigstens zwei Kombinationen aus den Folgen und den Frequenzen und den wenigstens zwei Betriebsmittelbelegungsarten umfasst.

9. Vorrichtung zum Belegen eines gemeinsam verwendeten Spektrums zur Verwendung in einem ersten Kommunikationsknoten, wobei die Vorrichtung Folgendes umfasst:
eine Bestimmungseinheit (210), die ausgelegt ist, gemäß einer Betriebsmittelbelegungsart des ersten Kommunikationsknotens für ein gemeinsam verwendetes Spektrum ein Sendebetriebsmittel aus Betriebsmittelreservierungsinformationen unter Verwendung einer voreingestellten Zuordnung zu bestimmen, wobei die voreingestellte Zuordnung eine Beziehung zwischen wenigstens zwei Betriebsmittelbelegungsarten und wenigstens zwei Sendebetriebsmitteln umfasst und die Betriebsmittelreservierungsinformationen die Betriebsmittelbelegungsart repräsentieren; und
eine Sendeeinheit (220), die ausgelegt ist, die Betriebsmittelreservierungsinformationen unter Verwendung des Sendebetriebsmittels zu einem zweiten Kommunikationsknoten zu senden;
wobei die Betriebsmittelbelegungsart eine zeitliche Länge umfasst, für die das gemeinsam verwendete Spektrum belegt werden soll; und die voreingestellte Zuordnung eine Zuordnung zwischen wenigstens zwei zeitlichen Längen und den wenigstens zwei Sendebetriebsmitteln umfasst.

10. Vorrichtung zum Belegen eines gemeinsam verwendeten Spektrums nach Anspruch 9, wobei
die Betriebsmittelbelegungsart ferner einen Frequenzbereich des gemeinsam verwendeten Spektrums, der belegt werden soll, umfasst und der Frequenzbereich kleiner als ein oder gleich einem gesamten Frequenzbereich des gemeinsam verwendeten Spektrums ist; und
die voreingestellte Zuordnung eine Zuordnung zwischen wenigstens zwei Kombinationen der zeitlichen Länge und des Frequenzbereichs und den wenigstens zwei Sendebetriebsmitteln umfasst.

11. Vorrichtung zum Belegen eines gemeinsam verwendeten Spektrums nach Anspruch 9 oder 10, wobei
das Sendebetriebsmittel wenigstens zwei Folgen umfasst, die zum Senden der Betriebsmittelreservierungsinformationen verwendet werden, wobei Autokorrelation jeder der Folgen gut ist und Kreuzkorrelation von jeweils zwei aus den Folgen schlecht ist; und
die voreingestellte Zuordnung eine Zuordnung zwischen den wenigstens zwei Betriebsmittelbelegungsarten und wenigstens zwei Folgen umfasst;
wobei
die Folge eine Folge mit konstanter Amplitude und Autokorrelation null, CAZAC-Folge, ist.

12. Vorrichtung zum Belegen eines gemeinsam verwendeten Spektrums nach Anspruch 11, wobei
die Sendebetriebsmittel ferner wenigstens zwei Frequenzen umfassen, die zum Senden der Betriebsmittelreservierungsinformationen verwendet werden, und jeweils zwei aus den Frequenzen vollständig orthogonal oder teilweise orthogonal sind; und die voreingestellte Zuordnung eine Zuordnung zwischen wenigstens zwei Kombinationen aus den Folgen und den Frequenzen und den wenigstens zwei Betriebsmittelbelegungsarten umfasst.

## Revendications

1. Procédé d'occupation de spectre partagé, le procédé comprenant les étapes consistant à:
déterminer (S110), par un premier noeud de communication en fonction d'un mode d'occupation de ressources du premier noeud de communication pour un spectre partagé, une ressource d'envoi d'informations de réservation de ressources en utilisant une correspondance prédéfinie, dans lequel la correspondance prédéfinie comprend un rapport entre au moins deux modes d'occupation de ressources et au moins deux ressources d'envoi, et les informations de réservation de ressources représentent le mode d'occupation de ressources ; et
envoyer (S120), par le premier noeud de communication, les informations de réservation de ressources en utilisant la ressource d'envoi, à un second noeud de communication ;
dans lequel le mode d'occupation de ressources comprend une longueur de temps pendant laquelle le spectre partagé doit être occupé ; et la correspondance prédéfinie comprend une correspondance entre au moins deux longueurs de temps et les au moins deux ressources d'envoi.

2. Procédé d'occupation de spectre partagé selon la revendication 1, dans lequel
le mode d'occupation de ressources comprend en outre une plage de fréquences du spectre partagé à occuper, et la plage de fréquences est inférieure ou égale à la totalité d'une plage de fréquences du spectre partagé; et
la correspondance prédéfinie comprend une correspondance entre au moins deux combinaisons de longueur de temps et de plage de fréquences et les au moins deux ressources d'envoi.

3. Procédé d'occupation de spectre partagé selon la revendication 1 ou 2, dans lequel
la ressource d'envoi comprend au moins deux séquences utilisées pour envoyer les informations de réservation de ressources, dans lequel une autocorrélation de chacune des séquences est bonne, et une corrélation croisée de chaque paire de séquences est faible ; et
la correspondance prédéfinie comprend une correspondance entre les au moins deux modes d'occupation de ressources et les au moins deux séquences;
dans lequel la séquence est une séquence d'autocorrélation nulle à amplitude constante, CAZAC.

4. Procédé d'occupation de spectre partagé selon la revendication 3, dans lequel
la ressource d'envoi comprend en outre au moins deux fréquences utilisées pour envoyer les informations de réservation de ressources, et les fréquences sont complètement orthogonales ou partiellement orthogonales par paire ; et
la correspondance prédéfinie comprend une correspondance entre au moins deux combinaisons des séquences et des fréquences et les au moins deux modes d'occupation de ressources.

5. Procédé d'occupation de spectre partagé, le procédé comprenant les étapes consistant à:
recevoir (S130), par un second noeud de communication, des informations de réservation de ressources provenant d'un premier noeud de communication, dans lequel les informations de réservation de ressources représentent un mode d'occupation de ressources du premier noeud de communication pour un spectre partagé ; et
analyser (S140), par le second noeud de communication, une ressource d'envoi des informations de réservation de ressources, et déterminer, en utilisant une correspondance prédéfinie, le mode d'occupation de ressources du premier noeud de communication pour le spectre partagé, dans lequel la correspondance prédéfinie comprend un rapport entre au moins deux modes d'occupation de ressources et au moins deux ressources d'envoi;
dans lequel le mode d'occupation de ressources comprend une longueur de temps pendant laquelle le spectre partagé doit être occupé ; et la correspondance prédéfinie comprend une correspondance entre au moins deux longueurs de temps et les au moins deux ressources d'envoi.

6. Procédé d'occupation de spectre partagé selon la revendication 5, dans lequel
le mode d'occupation de ressources comprend en outre une plage de fréquences du spectre partagé à occuper, et la plage de fréquences est inférieure ou égale à la totalité d'une plage de fréquences du spectre partagé ; et
la correspondance prédéfinie comprend une correspondance entre au moins deux combinaisons de longueur de temps et de plage de fréquences et les au moins deux ressources d'envoi.

7. Procédé d'occupation de spectre partagé selon la revendication 5 ou 6, dans lequel
la ressource d'envoi comprend au moins deux séquences utilisées pour envoyer les informations de réservation de ressources, dans lequel une autocorrélation de chacune des séquences est bonne, et une corrélation croisée de chaque paire de séquences est faible ; et
la correspondance prédéfinie comprend une correspondance entre les au moins deux modes d'occupation de ressources et les au moins deux séquences ;
dans lequel la séquence est une séquence d'autocorrélation nulle à amplitude constante, CAZAC.

8. Procédé d'occupation de spectre partagé selon la revendication 7, dans lequel
la ressource d'envoi comprend en outre au moins deux fréquences utilisées pour envoyer les informations de réservation de ressources, et les fréquences sont complètement orthogonales ou partiellement orthogonales par paire ; et
la correspondance prédéfinie comprend une correspondance entre au moins deux combinaisons des séquences et des fréquences et les au moins deux modes d'occupation de ressources.

9. Dispositif d'occupation de spectre partagé, destiné à une utilisation dans un premier noeud de communication, le dispositif comprenant :
une unité de détermination (210), adaptée pour déterminer, en fonction d'un mode d'occupation de ressources du premier noeud de communication pour un spectre partagé, une ressource d'envoi d'informations de réservation de ressources en utilisant une correspondance prédéfinie, dans lequel la correspondance prédéfinie comprend un rapport entre au moins deux modes d'occupation de ressources et au moins deux ressources d'envoi, et les informations de réservation de ressources représentent le mode d'occupation de ressources ; et
une unité d'envoi (220), adaptée pour envoyer les informations de réservation de ressources en utilisant la ressource d'envoi, à un second noeud de communication ;
dans lequel le mode d'occupation de ressources comprend une longueur de temps pendant laquelle le spectre partagé doit être occupé ; et la correspondance prédéfinie comprend une correspondance entre au moins deux longueurs de temps et les au moins deux ressources d'envoi.

10. Dispositif d'occupation de spectre partagé selon la revendication 9, dans lequel
le mode d'occupation de ressources comprend en outre une plage de fréquences du spectre partagé à occuper, et la plage de fréquences est inférieure ou égale à la totalité d'une plage de fréquences du spectre partagé ; et
la correspondance prédéfinie comprend une correspondance entre au moins deux combinaisons de longueur de temps et de plage de fréquences et les au moins deux ressources d'envoi.

11. Dispositif d'occupation de spectre partagé selon la revendication 9 ou 10, dans lequel
la ressource d'envoi comprend au moins deux séquences utilisées pour envoyer les informations de réservation de ressources, dans lequel une autocorrélation de chacune des séquences est bonne, et une corrélation croisée de chaque paire de séquences est faible ; et
la correspondance prédéfinie comprend une correspondance entre les au moins deux modes d'occupation de ressources et les au moins deux séquences;
dans lequel
la séquence est une séquence d'autocorrélation nulle à amplitude constante, CAZAC.

12. Dispositif d'occupation de spectre partagé selon la revendication 11, dans lequel
la ressource d'envoi comprend en outre au moins deux fréquences utilisées pour envoyer les informations de réservation de ressources, et les fréquences sont complètement orthogonales ou partiellement orthogonales par paire ; et
la correspondance prédéfinie comprend une correspondance entre au moins deux combinaisons des séquences et des fréquences et les au moins deux modes d'occupation de ressources.
